# EUROPÄISCHE PATENTSCHRIFT

(11) **EP 3 020 659 B1**
(45) Veröffentlichungstag und Bekanntmachung des Hinweises auf die Patenterteilung: **19.07.2017**
(21) Anmeldenummer: 15189799.8
(22) Anmeldetag: 14.10.2015
(51) Int. Cl.: B65G 21/06, B65G 21/10, B65G 23/44, B65G 39/09

(54) **FÖRDERMODUL MIT GEGOSSENER UMLENKBAUGRUPPE**
CONVEYOR MODULE WITH CAST RACEWAY COMPONENT
MODULE DE TRANSPORT COMPRENANT UN COMPOSANT DE DEVIATION COULÉ

(30) Priorität: 04.11.2014 DE 102014222459
(43) Veröffentlichungstag der Anmeldung: 18.05.2016
(73) Patentinhaber: ROBERT BOSCH GMBH, 70442 Stuttgart (DE)
(72) Erfinder: Ludwig, Peter, 72072 Tuebingen (DE)
(74) Vertreter: Maiß, Harald

(56) Entgegenhaltungen:
- DE-A1- 3 805 918
- DE-A1-102014 008 326
- DE-T2- 60 108 638
- DE-U1-202008 011 613
- US-A- 5 314 059
- US-A1- 2005 217 967

## Beschreibung

Die Erfindung betrifft ein Riemenmodul gemäß dem Oberbegriff von Anspruch 1.

Aus der DE 20 2008 011 613 U1 ist ein Riemenmodul gemäß dem Oberbegriff des Anspruchs 1 bekannt, das zur Verwendung in einer Förderanlage vorgesehen ist. Entsprechende Förderanlagen sind in dem Katalog "TS 2pv", Ausgabe 2.1, Best.-Nr. 3 842 540 431 der Bosch Rexroth AG gezeigt.

Das genannte Riemenmodul hat einen Träger, der sich in eine Längsrichtung erstreckt. Der Träger ist aus Aluminium im Strangpressverfahren hergestellt. An den beiden gegenüberliegenden Längsstirnseiten ist jeweils eine Umlenkbaugruppe mit einem Umlenkrad angeordnet. Weiter ist ein endloser Förderriemen vorgesehen, der in Form eines Zahnriemens ausgeführt ist. Der Förderriemen umschlingt die beiden Umlenkräder, wodurch ein vorlaufender und ein rücklaufender Riemenabschnitt definiert werden. Der vorlaufende Riemenabschnitt ist außen an dem Träger abgestützt, wobei er insbesondere auf diesem entlang gleitet. Beide Umlenkbaugruppen haben jeweils einen Grundkörper, der einen Lagerhalter aufweist. Der Lagerhalter ist von dem Umlenkrad umgeben. Zwischen dem Lagerhalter und dem Umlenkrad ist ein gesondertes Drehlager in Form eines Radialrillenkugellagers angeordnet, über welches das Umlenkrad an dem Lagerhalter bezüglich einer Drehachse drehbar abgestützt ist.

Die Aufgabe der Erfindung besteht darin, ein Fördermodul zu schaffen, welches in großen Stückzahlen kostengünstig hergestellt werden kann. Hierfür soll insbesondere die Anzahl der verwendeten Einzelteile reduziert werden. Die Einzelteile sollen im Gussverfahren, insbesondere im Kunststoff-Spritzgussverfahren oder im Aluminium-Druckgussverfahren, endkonturnah herstellbar sein. Das entsprechende Gusswerkzeug soll einfach aufgebaut sein, wobei es insbesondere keine beweglichen Schieber aufweisen soll.

Gemäß dem selbständigen Anspruch wird vorgeschlagen, dass der Grundkörper wenigstens einen sich in Längsrichtung erstreckenden Zapfen aufweisen, der in den Träger eingreift, wobei der wenigstens eine Zapfen und der Lagerhalter einstückig mit einer Seitenplatte des Grundkörpers ausgebildet sind. Über die Zapfen kann eine feste Verbindung zwischen dem Träger und dem Grundkörper hergestellt werden. Gleichzeitig ermöglicht der sich in Längsrichtung erstreckende Zapfen die Einstellung der Riemenspannung durch Verschiebung des Grundkörpers gegenüber dem Träger. Auf die aus der DE 20 2008011 613 U1 bekannte gesonderte Lager- bzw. Abdeckplatte kann damit verzichtet werden. Die Zapfen und der Lagerhalter werden kostengünstig an einem gemeinsamen Bauteil angeordnet, welches im Gussverfahren herstellbar ist.

Zwischen Träger und Förderriemen kann eine Gleiteinlage aus Kunststoff vorgesehen sein. Die Drehachse der Umlenkräder ist vorzugsweise senkrecht zur Längsrichtung ausgerichtet. Die äußere Oberfläche des Förderriemens kann im vorlaufenden Riemenabschnitt in Mitnahmeeingriff mit einem Fördergut bringbar sein. Das Umlenkrad ist vorzugsweise ausschließlich an dem Lagerhalter drehbar abgestützt.

In den abhängigen Ansprüchen sind vorteilhafte Weiterbildungen und Verbesserungen der Erfindung angegeben.

Es kann vorgesehen sein, dass ein gesondertes Drehlager mit zwei relativ zueinander drehbaren Ringen vorgesehen ist, wobei das Umlenkrad den einen Ring umgreift, wobei der Lagerhalter den anderen Ring umgreift. Hierdurch kann das gesonderte Drehlager auf besonders einfache und kostengünstige Weise am Umlenkrad und am Lagerhalter befestigt werden. Bei dem Drehlager handelt es sich vorzugsweise um ein Radialwälzlager, höchst vorzugsweise um ein Radialrillenkugellager. Vorzugsweise umgreift das Umlenkrad den Außenring von außen, wobei der Lagerhalter den Innenring von innen umgreift.

Es kann vorgesehen sein, dass das Umlenkrad wenigstens einen ersten Schnapphaken aufweist, welcher einen Ring des Drehlagers umgreift. Damit kann auf vom Umlenkrad gesondert ausgebildete Befestigungsmittel wie Schrauben verzichtet werden. Vorzugsweise sind mehrere erste Schnapphaken vorhanden, die höchst vorzugsweise gleichmäßig verteilt über den Umfang des Drehlagers angeordnet sind. Vorzugsweise ist der wenigstens eine erste Schnapphaken einstückig mit dem Umlenkrad ausgebildet.

Es kann vorgesehen sein, dass das Umlenkrad wenigstens einen ersten Schnapphaken aufweist, welcher einen Ring des Drehlagers umgreift. Damit kann auf vom Lagerhalter gesondert ausgebildete Befestigungsmittel wie Schrauben verzichtet werden. Vorzugsweise sind mehrere zweite Schnapphaken vorhanden, die höchst vorzugsweise gleichmäßig verteilt über den Umfang des Drehlagers angeordnet sind. vorzugsweise ist der wenigstens eine zweite Schnapphaken einstückig mit dem Grundkörper der Umlenkbaugruppe ausgebildet.

Es kann vorgesehen sein, dass der wenigstens eine erste Schnapphaken und der wenigstens eine zweite Schnapphaken parallel zur zugeordneten Drehachse ausgerichtet sind, wobei sie in entgegengesetzte Richtungen weisen. Hierdurch kann die Umlenkbaugruppe auf besonders einfache Weise montiert und demontiert werden. Darüber hinaus haben sowohl der Grundkörper als auch das Umlenkrad eine hohe mechanische Festigkeit.

Es kann vorgesehen sein, dass der Grundkörper zwei sich in Längsrichtung erstreckende Zapfen aufweist, welche derart in den Träger eingreifen, dass sie mit diesem verspannt sind. Die entsprechende Vorspannung ist vorzugsweise so groß gewählt, dass die entsprechende Klemmkraft in Längsrichtung die erforderliche Spannkraft des Förderriemens übersteigt. Damit kann die Spannung des Förderriemens allein durch Verschieben der Umlenkbaugruppe aufrecht erhalten werden, wobei die Riemenspannung durch die Reibkraft zwischen den Zapfen und dem Träger aufrecht erhalten wird.

Es kann vorgesehen sein, dass der wenigstens eine Zapfen wenigstens ein Sägezahnprofil aufweist, welches am Träger anliegt. Hierdurch soll erreicht werden, dass der Zapfen über seine gesamte Länge bzw. über seine gesamte Breite spielfrei am Träger anliegt. Hierbei ist anzumerken, dass zwischen den Zähnen jeweils kleine Bereiche vorhanden sein können, an denen keine Berührung zwischen Zapfen und Träger erfolgt. Die Spitzen des Sägezahnprofils werden beim Einschieben der Zapfen in den Träger vorzugsweise verformt, insbesondere plastisch verformt. Vorzugsweise sind wenigstens zwei gesonderte Sägezahnprofile vorgesehen, deren Sägezähne voneinander weg weisen. Die genannten Sägezahnprofile können am gleichen oder an unterschiedlichen Zapfen angeordnet sein.

Es kann vorgesehen sein, dass der Grundkörper einen ersten Fortsatz aufweist, der sich ausgehend von der Seitenplatte senkrecht zur Längsrichtung erstreckt, wobei er einstückig mit der Seitenplatte ausgebildet ist, wobei sich der wenigstens eine Zapfen ausgehend vom ersten Fortsatz in Längsrichtung erstreckt. Hierdurch kann die gewünschte einstückige Verbindung zwischen dem wenigstens einen Zapfen und der Seitenplatte auf besonders einfache Weise erreicht werden.

Es kann vorgesehen sein, dass der Träger zwei parallele Seitenführungen für den vorlaufenden und/oder den rücklaufenden Riemenabschnitt aufweist, wobei zumindest eine Seitenführung in Längsrichtung fluchtend am ersten Fortsatz fortgesetzt ist. Hierdurch wird auf besonders einfache Weise eine Seitenführung des Riemens erreicht, welche über alle geraden Abschnitte des Förderriemens wirksam ist. An dem Grundkörper kann ein gesonderter, plattenartiger Seitendeckel befestigt sein, wobei zumindest eine Seitenführung in Längsrichtung fluchtend am Seitendeckel fortgesetzt ist. Der Seitendeckel ist vorzugsweise mit dem Grundkörper verrastet oder verklemmt. Der erste Fortsatz ist vorzugsweise parallel zur zugeordneten Drehachse ausgerichtet, wobei er insbesondere mit einer im Wesentlichen konstanten Querschnittsform parallel zur genannten Drehachse verläuft.

Es kann vorgesehen sein, dass wenigstens eine Umlenkbaugruppe, vorzugsweise beide Umlenkbaugruppen, eine erste und eine zweite Öffnung aufweist, welche auf gegenüberliegenden Seiten der genannten Umlenkbaugruppe angeordnet sind, wobei der endlose Förderriemen durch die erste und die zweite Öffnung geführt ist. Hierdurch verläuft der Förderriemen um den Bereich der Umlenkräder geschützt innerhalb der betreffenden Umlenkbaugruppe. Der Grundkörper weist vorzugsweise einen zweiten Fortsatz auf, der sich ausgehend von der Seitenplatte senkrecht zur Längsrichtung erstreckt, wobei er einstückig mit der Seitenplatte ausgebildet ist. Höchst vorzugsweise sind der erste und der zweite Fortsatz in Längsrichtung derart beabstandet, dass sie die erste und die zweite Öffnung begrenzen. Der zweite Fortsatz ist vorzugsweise parallel zur zugeordneten Drehachse ausgerichtet, wobei er insbesondere mit einer im Wesentlichen konstanten Querschnittsform parallel zur genannten Drehachse verläuft.

Es kann vorgesehen sein, dass der Grundkörper spiegelsymmetrisch bezüglich einer Symmetrieebene ausgebildet ist, welche parallel zur Längsrichtung verläuft. Ein derartiger Grundkörper kann besonders einfach und kostengünstig im Gussverfahren hergestellt werden. Er ist darüber hinaus in identischer Form für beide Umlenkbaugruppen verwendbar.

Es kann vorgesehen sein, dass beide Umlenkbaugruppen einen Grundkörper aufweisen, wobei die beiden Grundkörper und die beiden Umlenkräder identisch ausgebildet sind. Damit können die Grundkörper in großen Stückzahlen kostengünstig hergestellt werden. Insbesondere kann für beide Grundkörper die gleiche Gussform verwendet werden. Die beiden Grundkörper werden vorzugsweise um 180° gedreht zueinander am Träger montiert. Höchst vorzugsweise ist der Träger hinsichtlich der Führungskontur für den vorlaufenden und den rücklaufenden Riemenabschnitt identisch ausgebildet. Der Grundkörper und das Umlenkrad werden vorzugsweise im Gussverfahren, höchst vorzugsweise im Kunststoff-Spritzgussverfahren oder im Aluminium-Druckgussverfahren hergestellt.

Es kann vorgesehen sein, dass die Seitenplatte des Grundkörpers senkrecht zur Drehachse des zugeordneten Umlenkrads ausgerichtet ist. Hierdurch kann die Seitenplatte besonders einfach mit einer Gussform hergestellt werden, deren Öffnungsrichtung parallel zur genannten Drehachse verläuft. Die genannte Seitenplatte hat vorzugsweise eine im Wesentlichen konstante Dicke.

Es kann vorgesehen sein, dass der Lagerhalter einen entlang der zugeordneten Drehachse verlaufenden Antriebsdurchbruch aufweist, wobei das Umlenkrad mit einem Antriebsfortsatz in den Antriebsdurchbruch hineinragt. Der Antriebsfortsatz ist vorzugsweise so ausgebildet, dass er mit einem Elektromotor, insbesondere einem Schrittmotor, in Drehantriebsverbindung bringbar ist. Der Antriebsfortsatz kann aufgrund der vorstehend vorgeschlagenen Merkmale mit einer großen Länge ausgeführt werden, so dass er ein hohes Drehmoment übertragen kann.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es stellt dar:
- Fig. 1: eine perspektivische Ansicht eines erfindungsgemäßen Riemenmoduls;
- Fig. 2: eine Explosionsansicht des Riemenmoduls nach Fig. 1;
- Fig. 3: einen Teillängsschnitt des Riemenmoduls nach Fig. 1 im Bereich einer Umlenkbaugruppe;
- Fig. 4: einen Querschnitt des Riemenmoduls nach Fig. 1 im Bereich eines Umlenkrads;
- Fig. 5: eine perspektivische Ansicht des Grundkörpers einer Umlenkbaugruppe des Riemenmoduls nach Fig. 1;
- Fig. 6: eine perspektivische Ansicht des Grundkörpers nach Fig. 5, wobei die Ansichtsrichtung um 180° gedreht ist;
- Fig. 7: eine perspektivische Ansicht des Umlenkrads des Riemenmoduls nach Fig. 1; und
- Fig. 8: einen Querschnitt des Trägers des Riemenmoduls nach Fig. 1

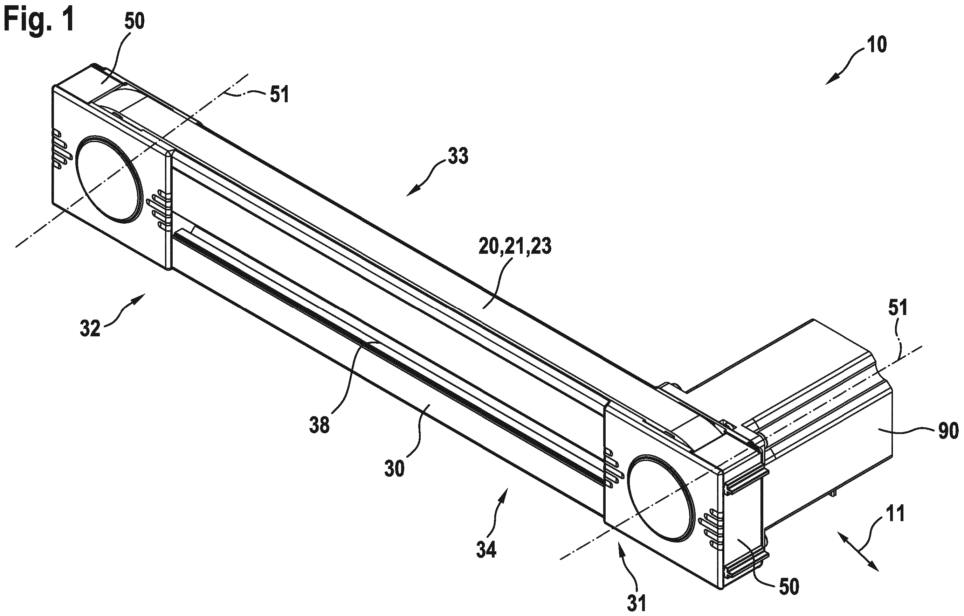

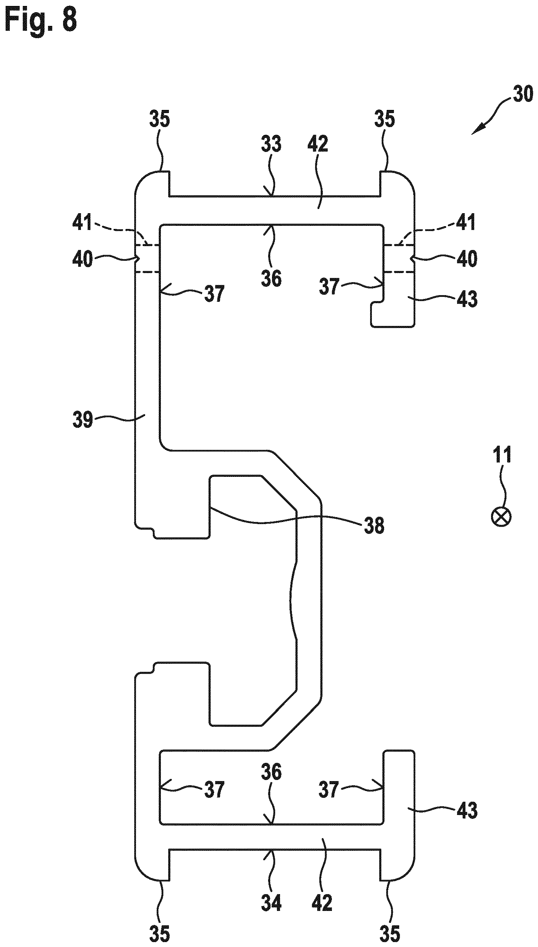

Fig. 1 zeigt eine perspektivische Ansicht eines erfindungsgemäßen Riemenmoduls 10. Das Riemenmodul 10 hat einen Träger 30, der sich mit der in Fig. 8 dargestellten, konstanten Querschnittsform in eine Längsrichtung 11 erstreckt. Der Träger 30 ist aus Aluminium im Strangpressverfahren hergestellt. An der in Fig. 1 oberen Vorlaufseite 33 des Trägers 30 läuft ein Förderriemen 20. Der Förderriemen 20 ist in Form eines endlosen Zahnriemens ausgebildet, welcher an der in Fig. 1 unteren Rücklaufseite 34 des Trägers 30 zurück geführt wird. Im vorlaufenden Riemenabschnitt 21 kann (nicht dargestelltes) Fördergut auf die äußere Oberfläche 23 des Förderriemens 20 aufgelegt werden, wobei das Fördergut vom Förderriemen 20 reibschlüssig in Längsrichtung 11 mitgenommen wird.

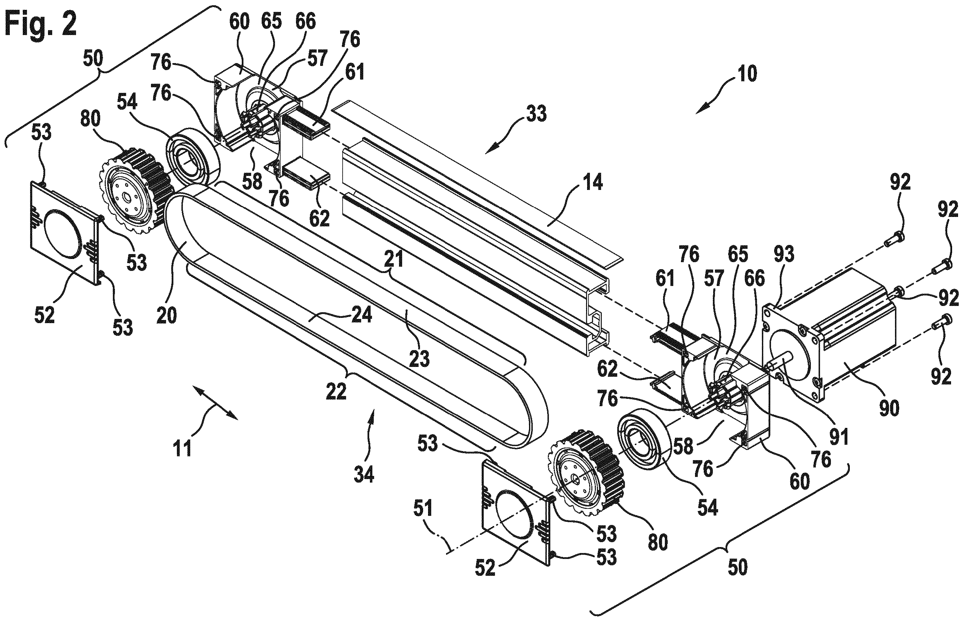

An den beiden gegenüberliegenden Längsstirnseiten 31; 32 des Trägers 30 ist jeweils eine Umlenkbaugruppe 50 angeordnet, wobei die Umlenkbaugruppen 50 identisch zueinander ausgebildet sind. In den Umlenkbaugruppen 50 umschlingt der Förderriemen 20 jeweils ein bezüglich einer zugeordneten Drehachse 51 drehbares Umlenkrad (Nr. 80 in Fig. 2), wodurch er von der Vorlaufseite 33 zur Rücklaufseite 34 umgelenkt wird bzw. umgekehrt. Eine der beiden Umlenkbaugruppen 50 wird von einem Elektromotor 90 angetrieben, der vorzugsweise als Schrittmotor ausgebildet ist.

Weiter ist auf die hinterschnittene Nut 38 an dem Träger 30 hinzuweisen, über die der Träger 30 an einer (nicht dargestellten) übergeordneten Baugruppe befestigt werden kann. Hierfür kann ein U-förmiger Verbinder vorgesehen sein, dessen beide Schenkel jeweils von einer Hammerschraube durchsetzt werden, wobei eine der Hammerschrauben in die hinterschnittene Nut 38 eingreift, so dass der entsprechende U-Schenkel gegen den Träger 30 gespannt wird.

Fig. 2 zeigt eine Explosionsansicht des Riemenmoduls 10 nach Fig. 1. Die Umlenkbaugruppen 50 sind jeweils aus einem Grundkörper 60, einem Drehlager 54, einem Umlenkrad 80 und einem Seitendeckel 52 zusammengesetzt. Die Grundkörper 60 haben jeweils einen ersten und einen zweiten Zapfen 61; 62, die sich in Längsrichtung 11 erstrecken, wobei sie in den Träger 30 eingreifen. Weiter hat der Grundkörper 60 einen Lagerhalter 66, auf welchen das gesonderte Drehlager 54 aufgeschnappt ist. Das Drehlager 54 ist in Form eines Radialrillenkugellagers ausgebildet. Das Drehlager 54 wird von dem Umlenkrad 80 umgriffen, so dass das Umlenkrad 80 den Lagerhalter 66 umgibt. Die beiden Zapfen 61; 62 und der Lagerhalter 66 sind einstückig mit einer Seitenplatte 65 des Grundkörpers 60 ausgebildet. Die Seitenplatte 65 ist im Wesentlichen in Form einer rechteckigen, ebenen Platte ausgebildet, welche sich senkrecht zur zugeordneten Drehachse 51 erstreckt.

Der Seitendeckel 52 ist aus Kunststoff im Spritzgussverfahren hergestellt. Er ist im Wesentlichen in Form einer rechteckigen, ebenen Platte ausgeführt, welche sich senkrecht zu zugeordnete Drehachse 51 erstreckt. Er ist damit parallel zur Seitenplatte 65 des Grundkörpers 60 angeordnet. An seinen vier Ecken hat der Seitendeckel 52 jeweils einen Klemmfortsatz 53, welcher in eine zugeordnete Klemmausnehmung 76 im Grundkörper 60 eingreift.

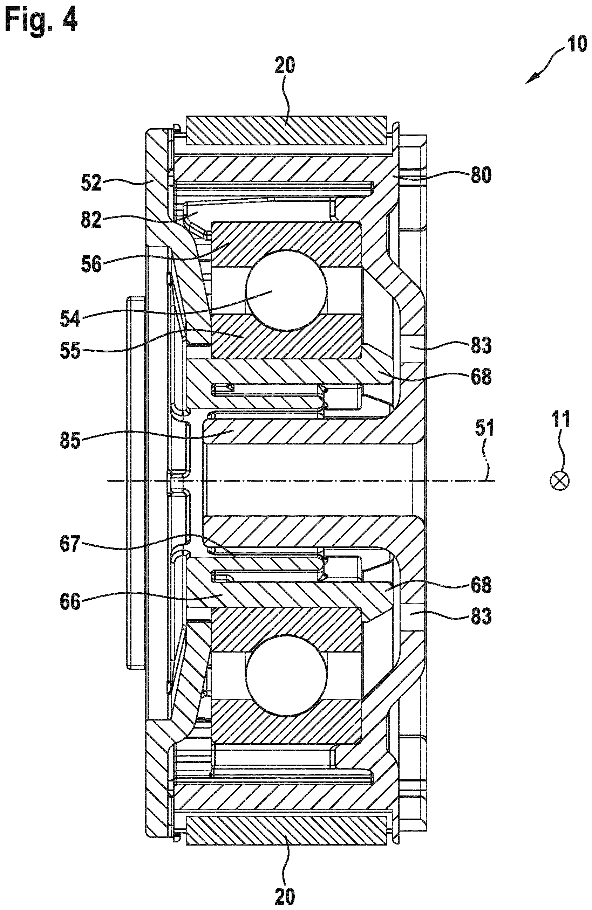

Der Elektromotor 90 hat einen Antriebszapfen 91, welcher in einen Antriebsfortsatz (Nr. 85 in Fig. 4) des Umlenkrads 80 eingreift. Der Elektromotor 90 hat weiter einen Flansch 93, welcher an der Seitenplatte 65 des Grundkörpers 60 anliegt, wobei er dort mit vorliegend insgesamt vier Befestigungsschrauben 92 befestigt ist.

Weiter ist auf die Gleiteinlage 14 hinzuweisen, welche zwischen dem Förderriemen 20 und dem Träger 30 an der Vorlaufseite 33 angeordnet ist. Die Gleiteinlage 14 erstreckt sich mit einer konstanten rechteckigen Querschnittsform über die gesamte Länge des Trägers 30. Dabei überdeckt die Gleiteinlage 14 auch die Grundkörper 60 der Umlenkbaugruppe 50, wobei sie bis zur dortigen ersten Öffnung 57 reicht. Die Gleiteinlage 14 besteht aus Kunststoff, wobei ihre Breite im Wesentlichen gleich der Breite des Förderriemens 20 gewählt ist. Die erste und die zweite Öffnung 57; 58 sind auf gegenüberliegenden Seiten des Grundkörpers 60 angeordnet, wobei der endlose Förderriemen 20 durch die erste und die zweite Öffnung 57; 58 geführt ist.

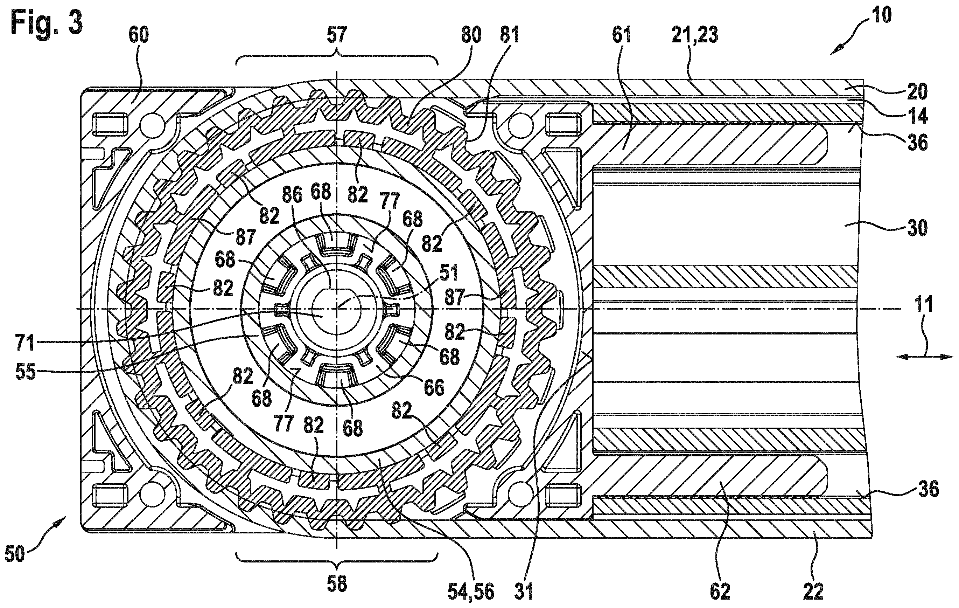

Fig. 3 zeigt einen Teillängsschnitt des Riemenmoduls 10 nach Fig. 1 im Bereich einer Umlenkbaugruppe 50. Die Schnittebene verläuft dabei senkrecht zur Drehachse 51 des betreffenden Umlenkrads 80. Das Umlenkrad 80 ist über seinen gesamten Umfang mit einer Verzahnung 81 versehen. In diese Verzahnung 81 greift der Förderriemen 20 mit einer angepassten Verzahnung ein, die in Fig. 3 jedoch nicht dargestellt ist. Der Förderriemen 20 umschlingt dabei das Umlenkrad 80 über einen Winkel von 180°. Der Förderriemen 20 ist durch die erste und die zweite Öffnung 57; 58 geführt, welche an gegenüberliegenden Seiten der Umlenkbaugruppe 50 angeordnet sind.

Dem Außenring 56 des Drehlagers 54 sind vorliegend insgesamt acht erste Schnapphaken 82 zugeordnet, welche gleichmäßig verteilt über den Umfang des Umlenkrads 80 angeordnet sind. Zwischen zwei benachbarten ersten Schnapphaken 82 ist jeweils eine erste Auflagefläche 87 des Umlenkrads 80 angeordnet. Die ersten Schnapphaken 82 und die ersten Auflageflächen 87 liegen jeweils im Wesentlichen spielfrei an der Außenumfangsfläche des Außenrings 56 an, wobei die Biegeelastizität der ersten Schnapphaken 82 wesentlich größer als die der ersten Auflageflächen 87 ist. Die ersten Auflageflächen 87 bewirken dementsprechend die zentrische Ausrichtung des Außenrings 56 am Umlenkrad 80, wobei die ersten Schnapphaken 82 den Außenring 56 am Umlenkrad 80 halten.

Der Lagerhalter 66 weist insgesamt sechs zweite Schnapphaken 68 auf, welche dem Innenring 55 des Drehlagers 54 zugeordnet sind, wobei sie gleichmäßig verteilt über dessen Umfang angeordnet sind. Zwischen zwei benachbarten zweiten Schnapphaken 68 ist jeweils eine Auflagefläche 77 des Lagerhalters 66 angeordnet. Die zweiten Schnapphaken 68 und die zweiten Auflageflächen 77 liegen jeweils im Wesentlichen spielfrei an der Innenumfangsfläche des Innenrings 55 an, wobei die Biegeelastizität der zweiten Schnapphaken 68 wesentlich größer als die der zweiten Auflageflächen 77 ist. Die zweiten Auflageflächen 77 bewirken dementsprechend die zentrische Ausrichtung des Innenrings 55 an dem Lagerhalter 66, wobei die zweiten Schnapphaken 68 den Innenring 55 am Lagerhalter 66 halten.

Weiter ist in Fig. 3 die Querschnittsform des Antriebszapfens 91 des Elektromotors zu erkennen. Dieser ist mit einer Abflachung versehen, welche an einer angepassten Abflachung 86 am Umlenkrad 80 anliegt, so dass eine formschlüssige Drehmitnahmeverbindung vorliegt.

Der Grundkörper 60 der Umlenkbaugruppe 50 liegt an einer ersten Längsstirnseite 31 des Trägers 30 an. Die erste Längsstirnseite 31 ist eben ausgebildet und senkrecht zur Längsrichtung 11 ausgerichtet. Weiter ist der Grundkörper 60 mit einem ersten und einem zweiten Zapfen 61; 62 versehen, welche sich parallel zur Längsrichtung 11 erstrecken, wobei sie in den Träger 30 hinein ragen. Dort liegen sie jeweils an einer ersten Klemmfläche 36 am Träger 30 an. An der gegenüberliegenden zweiten Stirnfläche 32 des Trägers 30 liegen die gleichen Verhältnisse vor, wie vorstehend für die erste Längsstirnseite 31 beschrieben.

Darüber hinaus ist in Fig. 3 zu erkennen, wie die Gleiteinlage 14 zwischen den Träger 30 und den Förderriemen 20 eingebaut ist, so dass der Förderriemen 20 auf dieser entlang gleiten kann.

Fig. 4 zeigt einen Querschnitt des Riemenmoduls 10 nach Fig. 1 im Bereich eines Umlenkrads 80. Die Schnittebene verläuft dabei durch die Drehachse 51 des Umlenkrads 80 und ist senkrecht zur Längsrichtung 11 ausgerichtet. Der erste Schnapphaken 82 erstreckt sich parallel zur Drehachse 51. An einem Ende ist er einstückig mit dem verbleibenden Umlenkrad 80 verbunden. Das gegenüberliegende, freie Ende des ersten Schnapphakens 82 ist mit einem Haken versehen, welcher den Außenring 56 umgreift, wobei sich der genannte Haken nach radial innen erstreckt. Der entsprechende Umgriff kann gelöst werden, nachdem der Seitendeckel 52 vom Grundkörper abgenommen wurde, indem der erste Schnapphaken 82 nach radial außen gebogen wird. Hierdurch kann das Drehlager 54 vom Umlenkrad 80 demontiert werden.

Die zweiten Schnapphaken 68 erstrecken sich ebenfalls parallel zur Drehachse 51, wobei sie entgegengesetzt zu den ersten Schnapphaken 82 ausgerichtet sind. An einem Ende ist der zweite Schnapphaken 68 einstückig mit dem Grundkörper der Umlenkbaugruppe verbunden. Das gegenüberliegende freie Ende des zweiten Schnapphakens 68 ist mit einem Haken versehen, welcher den Innenring 55 umgreift, wobei sich der genannte Haken nach radial außen erstreckt. Der entsprechende Umgriff kann mit einem Werkzeug, welches durch den Demontagedurchbruch 83 im Umlenkrad 80 geführt wird, gelöst werden. Dabei ist jedem zweiten Schnapphaken 82 ein Demontagedurchbruch 83 zugeordnet. Dementsprechend kann das eingeschnappte Drehlager 54 vom Grundkörper der Umlenkbaugruppe demontiert werden.

Weiter ist auf Antriebsfortsatz 85 des Umlenkrads 80 hinzuweisen, der sich parallel zur Drehachse 51 in einen Antriebsdurchbruch 67 des Grundkörpers 60 der Umlenkbaugruppe hinein erstreckt. Die Länge des Antriebsfortsatzes 85 ist an die Länge des Antriebszapfens (Nr. 91 in Fig. 2) des Elektromotors angepasst, so dass ein hohes Drehmoment auf das Umlenkrad 80 übertragen werden kann.

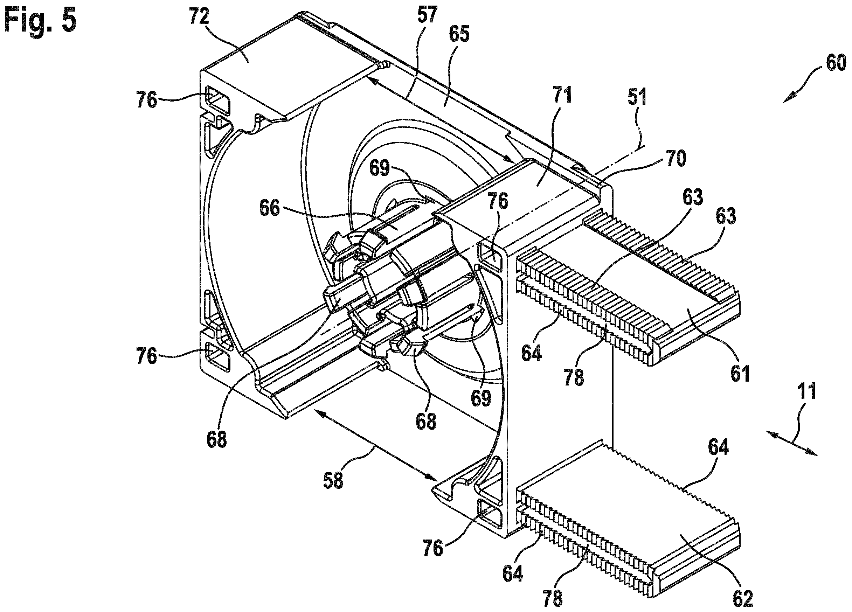

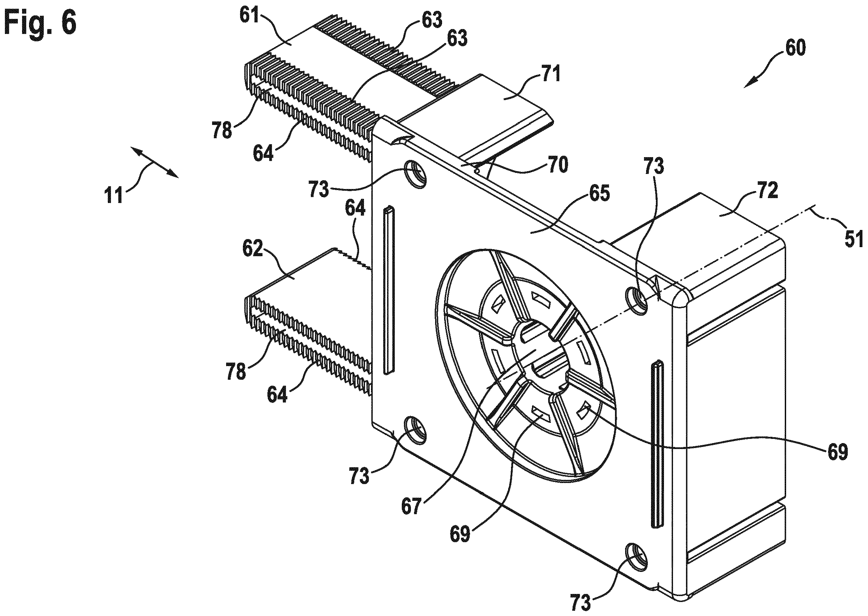

Fig. 5 zeigt eine perspektivische Ansicht des Grundkörpers 60 einer Umlenkbaugruppe 50 des Riemenmoduls nach Fig. 1. Fig. 6 zeigt eine perspektivische Ansicht des Grundkörpers 60 nach Fig. 5, wobei die Ansichtsrichtung um 180° gedreht ist. Der Grundkörper 60 hat eine Seitenplatte 65, welche näherungsweise eben mit einer konstanten Dicke ausgebildet ist, wobei sie senkrecht zur Drehachse 51 ausgerichtet ist. Ausgehend von der Seitenplatte 65 erstreckt sich ein erster und ein zweiter Fortsatz 71; 72 mit einer im Wesentlichen konstanten Querschnittsform parallel zur Drehachse 51. Der erste und der zweite Fortsatz 71; 72 sind näherungsweise spiegelsymmetrisch zueinander ausgebildet, wobei sie einstückig mit der Seitenplatte 65 ausgeführt sind. Außen sind der erste und der zweite Fortsatz 71; 72 mit ebenen Oberflächen ausgebildet, welche senkrecht bzw. parallel zur Längsrichtung 11 ausgerichtet sind. Innen sind der erste und der zweite Fortsatz 71; 72 mit geringem Abstand an das Umlenkrad mit dem Förderriemen angepasst.

Zwischen dem ersten und dem zweiten Fortsatz 71; 72 ist eine erste und eine zweite Öffnung 57; 58 ausgebildet, die jeweils im Wesentlichen rechteckig ausgebildet ist, wobei die beiden Öffnungen 57; 58 auf gegenüberliegenden Seiten des Grundkörpers 60 angeordnet sind. In den Eckbereichen des ersten und des zweiten Fortsatzes 71; 72 sind die oben bereits angesprochenen Klemmausnehmungen 76 angeordnet, in welche die Klemmfortsätze (Nr. 53 in Fig. 1) des Seitendeckels eingreifen.

Ausgehend vom ersten Fortsatz 71 erstrecken sich ein erster und ein zweiter Zapfen 61; 62 parallel zur Längsrichtung 11. Der erste und der zweite Zapfen 61; 62 sind spiegelsymmetrisch zueinander ausgebildet, wobei sie jeweils einstückig mit dem ersten Fortsatz 71 ausgeführt sind. Die Breite der Zapfen 61; 62 in Richtung der Drehachse 51 ist etwa 3-mal so groß wie deren Dicke, gemessen senkrecht zur Drehachse 51. An den Oberflächen der Zapfen 61; 62, welche am Träger (Nr. 30 in Fig. 2) anliegen, ist jeweils ein erstes bzw. ein zweites Sägezahnprofil 63; 64 angeordnet. Die entsprechenden Spitzen der Sägezähne werden beim Einschieben der Zapfen 61; 62 in den Träger plastisch verformt, so dass sich eine spielfreie und gleichzeitig großflächige Anlage am Träger ergibt. Das erste Sägezahnprofil 63 umfasst dabei zwei parallele Reihen von Sägezähnen, die auf einer einzigen Seite des zugeordneten Zapfens 61; 62 angeordnet sind. Die seitlichen zweiten Sägezahnprofile 64 sind demgegenüber auf zwei gegenüberliegenden Seiten des zugeordneten Zapfens 61; 62 angeordnet. In der Mitte der zweiten Sägezahnprofile 64 ist ein Schlitz 78 angeordnet, welcher sich parallel zur Längsrichtung 11 erstreckt. In diesen Schlitz 78 wird vorzugsweise eine selbstschneidende Fixierschraube eingeschraubt, welche eine Bohrung (Nr. 41 in Fig. 8) im Träger durchsetzt. Damit kann nach erfolgter Spannungseinstellung des Förderriemens die Lage des Grundkörpers 60 gegenüber dem Träger fixiert werden.

Weiter ist auf die Seitenführung 70 hinzuweisen, die einstückig mit dem Grundkörper 60 ausgebildet ist. Diese ist in einer Flucht mit einer der beiden Seitenführungen (Nr. 35 in Fig. 8) am Träger angeordnet. Die andere Seitenführung wird vom Seitendeckel (Nr. 52 in Fig. 2) in einer Flucht fortgesetzt.

Darüber hinaus ist auf die Gussformdurchbrüche 69 am Grundkörper 60 hinzuweisen. Jedem der zweiten Schnapphaken 68 ist ein derartiger Gussformdurchbruch 69 zugeordnet. Durch den Gussformdurchbruch 69 wird jeweils ein Fortsatz an der Gussform zur Herstellung des Grundkörpers 60 hindurch geführt, welcher eine Seitenfläche des Hakens am Ende des zweiten Schnapphakens 68 abbildet. Hierdurch werden Hinterschneidungen an der genannten Gussform vermieden, so dass diese zweiteilig und ohne bewegliche Schieber ausgebildet werden kann.

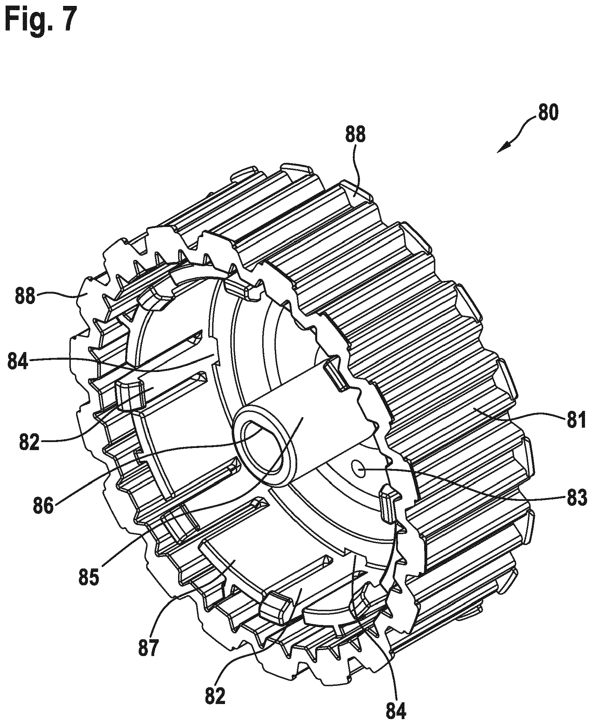

Fig. 7 zeigt eine perspektivische Ansicht des Umlenkrads 80 des Riemenmoduls nach Fig. 1. Das Umlenkrad 80 ist so ausgebildet, dass es mit einer zweiteiligen Gussform ohne bewegliche Schieber hergestellt werden kann. Hierfür ist es im Bereich der ersten Schnapphaken 82 mit Gussformdurchbrüchen 84 versehen, die analog zu den entsprechenden Gussformdurchbrüchen (Nr. 69 in Fig. 5 und 6) am Grundkörper ausgebildet sind. Weiter ist auf die Seitenführungen 88 für den Förderriemen hinzuweisen, die zum gleichen Zweck nicht durchgehend ausgebildet sind. Vielmehr ist jedem Zahnzwischenraum nur eine einzige Seitenführung 88 zugeordnet, wobei die Seitenführungen 88 abwechselnd auf gegenüberliegenden Seiten des Umlenkrads 80 angeordnet sind.

Fig. 8 zeigt einen Querschnitt des Trägers 30 des Riemenmoduls nach Fig. 1. Der Träger 30 verläuft mit der dargestellten, konstanten Querschnittsform entlang der Längsrichtung 11. Der Träger 30 ist aus Aluminium im Strangpressverfahren hergestellt. Er hat eine ebene Seitenwand 39, welche mit einer hinterschnittenen Nut 38 versehen ist, die T-förmig ausgebildet ist, so dass sie eine Hammerschraube oder einen Nutenstein aufnehmen kann. Am in Fig. 8 oberen und unteren Ende des Trägers 30 ist jeweils eine Führungskontur für den Förderriemen vorgesehen, wobei die beiden Führungskonturen spiegelsymmetrisch zueinander ausgebildet sind. Die genannte Führungskontur umfasst jeweils einen ebenen Mittelteil 42, welcher senkrecht zur Seitenwand 39 angeordnet ist. An den beiden gegenüberliegenden Seitenrändern des Mittelteils 42 ist jeweils eine Seitenführung 35 für den Förderriemen angeordnet. Die beiden einander zugeordneten Seitenführungen 35 sind spiegelsymmetrisch zueinander ausgebildet, wobei eine der genannten Seitenführungen 35 in einer Flucht mit der Seitenwand 39 angeordnet ist. Die andere Seitenführung 35 ist in einer Flucht mit einer Klemmwand 43 angeordnet, welche innen eine zweite Klemmfläche 37 bildet.

Innen bildet das Mittelteil 42 eine erste Klemmfläche 36, an welcher der erste bzw. der zweite Zapfen (Nr. 61; 62 in Fig. 5; 6) mit dem ersten Sägezahnprofil (Nr. 63 in Fig. 5; 6) anliegt. Die Seitenwand 39 und die Klemmwände 43 bilden jeweils gegenüberliegende zweite Klemmflächen 37, an welchen der erste bzw. der zweite Zapfen (Nr. 61; 62 in Fig. 5; 6) mit dem seitlichen, zweiten Sägezahnprofil (Nr. 64 in Fig. 5; 6) anliegt. Die ersten und die zweiten Klemmflächen 36; 37 sind eben ausgebildet, wobei sie senkrecht zueinander ausgerichtet sind, wobei sie parallel zur Längsrichtung 11 verlaufen.

Weiter ist auf die bereits angesprochenen Bohrungen 41 für die Fixierschrauben hinzuweisen, welche in der Seitenwand 39 bzw. in der in Fig. 8 oberen Klemmwand 43 angeordnet sind. Die Bohrungen 41 werden bei der Montage des Riemenmoduls hergestellt. Hierfür ist außen an dem Träger 30 jeweils eine zugeordnete Bohrnut 40 angeordnet, welche sich über die gesamte Länge des Trägers 30 erstreckt. In der Bohrnut 40 kann ein Bohrer, insbesondere ein Zentrierbohrer, so angesetzt werden, dass dessen erforderliche Mittenlage gegenüber dem ersten Zapfen (Nr. 61 in Fig. 5; 6) genau eingehalten werden kann.

### Bezugszeichenliste

- 10: Riemenmodul
- 11: Längsrichtung
- 14: Gleiteinlage

- 20: Förderriemen
- 21: vorlaufender Riemenabschnitt
- 22: rücklaufender Riemenabschnitt
- 23: äußere Oberfläche

- 30: Träger
- 31: erste Längsstirnseite
- 32: zweite Längsstirnseite
- 33: Vorlaufseite
- 34: Rücklaufseite
- 35: Seitenführung am Träger
- 36: erste Klemmfläche
- 37: zweite Klemmfläche
- 38: hinterschnittene Nut
- 39: Seitenwand des Trägers
- 40: Bohrnut
- 41: Bohrung für Fixierschraube
- 42: Mittelteil
- 43: Klemmwand

- 50: Umlenkbaugruppe
- 51: Drehachse
- 52: Seitendeckel
- 53: Klemmfortsatz
- 54: Drehlager
- 55: Innenring
- 56: Außenring
- 57: erste Öffnung
- 58: zweite Öffnung

- 60: Grundkörper
- 61: erster Zapfen
- 62: zweiter Zapfen
- 63: erstes Sägezahnprofil
- 64: zweites Sägezahnprofil
- 65: Seitenplatte
- 66: Lagerhalter
- 67: Antriebsdurchbruch
- 68: zweiter Schnapphaken
- 69: Gussformdurchbruch am Grundkörper
- 70: Seitenführung am Grundkörper
- 71: erster Fortsatz
- 72: zweiter Fortsatz
- 73: Befestigungsbohrung für Elektromotor
- 76: Klemmausnehmung für Seitendeckel
- 77: zweite Auflagefläche
- 78: Schlitz zwischen den zweiten Sägezahnprofilen

- 80: Umlenkrad
- 81: Verzahnung des Umlenkrads
- 82: erster Schnapphaken
- 83: Demontagedurchbruch am Umlenkrad
- 84: Gussformdurchbruch um Umlenkrad
- 85: Antriebsfortsatz
- 86: Abflachung
- 87: erste Auflagefläche
- 88: Seitenführung am Umlenkrad
- 90: Elektromotor
- 91: Antriebszapfen
- 92: Befestigungsschraube
- 93: Flansch

## Patentansprüche

1. Riemenmodul (10) zur Verwendung in einer Förderanlage, wobei das Riemenmodul (10) einen sich in eine Längsrichtung (11) erstreckenden Träger (30) aufweist, an dessen beiden gegenüberliegenden Längsstirnseiten (31; 32) jeweils eine Umlenkbaugruppe (50) mit einem Umlenkrad (80) angeordnet ist, wobei ein endloser Förderriemen (20) vorgesehen ist, welcher die beiden Umlenkräder (80) umschlingt, wodurch ein vorlaufender und ein rücklaufender Riemenabschnitt (21; 22) definiert werden, wobei der vorlaufende Riemenabschnitt (21) außen an dem Träger (30) abgestützt ist, wobei wenigstens eine Umlenkbaugruppe (50) einen Grundkörper (60) mit einen Lagerhalter (66) aufweist, wobei das Umlenkrad (80) den Lagerhalter (66) umgibt, wobei es an diesem bezüglich einer Drehachse (51) drehbar abgestützt ist,
**dadurch gekennzeichnet, dass** der Grundkörper (60) wenigstens einen sich in Längsrichtung (11) erstreckenden Zapfen (61; 62) aufweist, der in den Träger (30) eingreift, wobei der wenigstens eine Zapfen (61; 62) und der Lagerhalter (66) einstückig mit einer Seitenplatte (65) des Grundkörpers (60) ausgebildet sind.

2. Riemenmodul nach Anspruch 1,
wobei ein gesondertes Drehlager (54) mit zwei relativ zueinander drehbaren Ringen (55; 56) vorgesehen ist, wobei das Umlenkrad (80) den einen Ring (56) umgreift, wobei der Lagerhalter (66) den anderen Ring (55) umgreift.

3. Riemenmodul nach Anspruch 2,
wobei das Umlenkrad (80) wenigstens einen ersten Schnapphaken (82) aufweist, welcher einen Ring (56) des Drehlagers (54) umgreift.

4. Riemenmodul nach Anspruch 2 oder 3,
wobei der Lagerhalter (66) wenigstens einen zweiten Schnapphaken (68) aufweist, welcher einen Ring (55) des Drehlagers (54) umgreift.

5. Riemenmodul nach Anspruch 4,
wobei der wenigstens eine erste Schnapphaken (82) und der wenigstens eine zweite Schnapphaken (68) parallel zur zugeordneten Drehachse (51) ausgerichtet sind, wobei sie in entgegengesetzte Richtungen weisen.

6. Riemenmodul nach einem der vorstehenden Ansprüche,
wobei der Grundkörper (60) zwei sich in Längsrichtung (11) erstreckende Zapfen (61; 62) aufweist, welche derart in den Träger (30) eingreifen, dass sie mit diesem verspannt sind.

7. Riemenmodul nach einem der vorstehenden Ansprüche,
wobei der wenigstens eine Zapfen (61; 62) wenigstens ein Sägezahnprofil (63; 64) aufweist, welches am Träger (30) anliegt.

8. Riemenmodul nach einem der vorstehenden Ansprüche,
wobei der Grundkörper (60) einen ersten Fortsatz (71) aufweist, der sich ausgehend von der Seitenplatte (65) senkrecht zur Längsrichtung (11) erstreckt, wobei er einstückig mit der Seitenplatte (65) ausgebildet ist, wobei sich der wenigstens eine Zapfen (61; 62) ausgehend vom ersten Fortsatz (71) in Längsrichtung (11) erstreckt.

9. Riemenmodul nach Anspruch 8,
wobei der Träger (30) zwei parallele Seitenführungen (35) für den vorlaufenden und/oder den rücklaufenden Riemenabschnitt (21; 22) aufweist, wobei zumindest eine Seitenführung (70) in Längsrichtung (11) fluchtend am ersten Fortsatz (71) fortgesetzt ist.

10. Riemenmodul nach einem der vorstehenden Ansprüche,
wobei wenigstens eine Umlenkbaugruppe (50), vorzugsweise beide Umlenkbaugruppen (50), eine erste und eine zweite Öffnung (57; 58) aufweist, welche auf gegenüberliegenden Seiten der genannten Umlenkbaugruppe (50) angeordnet sind, wobei der endlose Förderriemen (20) durch die erste und die zweite Öffnung (57; 58) geführt ist.

11. Riemenmodul nach einem der vorstehenden Ansprüche,
wobei der Grundkörper (60) spiegelsymmetrisch bezüglich einer Symmetrieebene ausgebildet ist, welche parallel zur Längsrichtung (11) verläuft.

12. Riemenmodul nach einem der vorstehenden Ansprüche,
wobei beide Umlenkbaugruppen (50) einen Grundkörper (60) aufweisen, wobei die beiden Grundkörper (60) und die beiden Umlenkräder (80) identisch ausgebildet sind.

13. Riemenmodul nach einem der vorstehenden Ansprüche,
wobei die Seitenplatte (65) des Grundkörpers (60) senkrecht zur Drehachse (51) des zugeordneten Umlenkrads (80) ausgerichtet ist.

14. Riemenmodul nach einem der vorstehenden Ansprüche,
wobei der Lagerhalter (66) einen entlang der zugeordneten Drehachse (51) verlaufenden Antriebsdurchbruch (67) aufweist, wobei das Umlenkrad (80) mit einem Antriebsfortsatz (85) in den Antriebsdurchbruch (67) hineinragt.

## Claims

1. Belt module (10) for use in a conveyor installation,
wherein the belt module (10) has a support (30), which extends in a longitudinal direction (11) and on two opposite longitudinal end sides (31; 32) of which is arranged a respective deflecting subassembly (50) with a deflecting wheel (80), wherein an endless conveyor belt (20) is provided and wraps around the two deflecting wheels (80), as a result of which a forward belt portion (21) and a return belt portion (22) are defined, wherein the forward belt portion (21) is supported on the outside of the support (30), wherein at least one deflecting subassembly (50) has a main body (60) with a bearing holder (66), wherein the deflecting wheel (80) surrounds the bearing holder (66), and wherein it is supported on the bearing holder such that it can be rotated in relation to an axis of rotation (51), **characterized in that** the main body (60) has at least one stub (61; 62), which extends in the longitudinal direction (11) and engages in the support (30), wherein the at least one stub (61; 62) and the bearing holder (66) are formed in one piece with a side panel (65) of the main body (60).

2. Belt module according to Claim 1,
wherein a separate rotary bearing (54) is provided and has two rings (55; 56) which can be rotated relative to one another, wherein the deflecting wheel (80) engages around the one ring (56), and wherein the bearing holder (66) engages around the other ring (55).

3. Belt module according to Claim 2,
wherein the deflecting wheel (80) has at least one first snap-action hook (82), which engages around a ring (56) of the rotary bearing (54).

4. Belt module according to Claim 2 or 3,
wherein the bearing holder (66) has at least one second snap-action hook (68), which engages around a ring (55) of the rotary bearing (54).

5. Belt module according to Claim 4,
wherein the at least one first snap-action hook (82) and the at least one second snap-action hook (68) are oriented parallel to the associated axis of rotation (51), said hooks facing in opposite directions.

6. Belt module according to one of the preceding claims,
wherein the main body (60) has two stubs (61; 62), which extend in the longitudinal direction (11) and engage in the support (30) such that they are braced therewith.

7. Belt module according to one of the preceding claims,
wherein the at least one stub (61; 62) has at least one sawtooth profile (63; 64) which butts against the support (30).

8. Belt module according to one of the preceding claims,
wherein the main body (60) has a first extension (71), which, starting from the side panel (65), extends perpendicularly to the longitudinal direction (11), wherein it is formed in one piece with the side panel (65), and wherein the at least one stub (61; 62), starting from the first extension (71), extends in the longitudinal direction (11).

9. Belt module according to Claim 8,
wherein the support (30) has two parallel side guides (35) for the forward belt portion (21) and/or the return belt portion (22), wherein at least one side guide (70) is continued in alignment, as seen in the longitudinal direction (11), on the first extension (71).

10. Belt module according to one of the preceding claims,
wherein at least one deflecting subassembly (50) has, preferably both deflecting subassemblies (50) have, a first and a second opening (57; 58), which are arranged on opposite sides of the aforementioned deflecting subassembly (50), wherein the endless conveyor belt (20) is guided through the first and the second openings (57; 58).

11. Belt module according to one of the preceding claims,
wherein the main body (60) is formed in a mirror-symmetrical manner in relation to a plane of symmetry which runs parallel to the longitudinal direction (11).

12. Belt module according to one of the preceding claims,
wherein the two deflecting subassemblies (50) have a main body (60), wherein the two main bodies (60) and the two deflecting wheels (80) are of identical design.

13. Belt module according to one of the preceding claims,
wherein the side panel (65) of the main body (60) is oriented perpendicularly to the axis of rotation (51) of the associated deflecting wheel (80).

14. Belt module according to one of the preceding claims,
wherein the bearing holder (66) has a drive through-passage (67), which runs along the associated axis or rotation (51), wherein the deflecting wheel (80) projects into the drive through-passage (67) by way of a drive extension (85).

## Revendications

1. Module de courroie (10) pour l'utilisation dans une installation de transport, le module de courroie (10) présentant un support (30) s'étendant dans une direction longitudinale (11), au niveau des deux côtés frontaux longitudinaux opposés (31 ; 32) duquel est à chaque fois disposé un module de déviation (50) avec une poulie de renvoi (80), une courroie de transport sans fin (20) étant prévue, laquelle entoure les deux poulies de renvoi (80) de sorte qu'une portion de courroie aller et une portion de courroie retour (21 ; 22) soient définies, la portion de courroie aller (21) étant supportée à l'extérieur sur le support (30), au moins un module de déviation (50) présentant un corps de base (60) avec un support sur palier (66), la poulie de renvoi (80) entourant le support sur palier (66), en étant supportée à rotation sur celui-ci par rapport à un axe de rotation (51),
**caractérisé en ce que** le corps de base (60) présente au moins un tourillon (61 ; 62) s'étendant dans la direction longitudinale (11), qui s'engage dans le support (30), l'au moins un tourillon (61 ; 62) et le support sur palier (66) étant réalisés d'une seule pièce avec une plaque latérale (65) du corps de base (60).

2. Module de courroie selon la revendication 1,
dans lequel un palier pivotant séparé (54) est pourvu de deux bagues (55 ; 56) pouvant tourner l'une par rapport à l'autre, la poulie de renvoi (80) venant en prise autour de l'une des bagues (56), le dispositif le support sur palier (66) venant en prise autour de l'autre bague (55).

3. Module de courroie selon la revendication 2,
dans lequel la poulie de renvoi (80) présente au moins un premier crochet d'encliquetage (82) qui vient en prise autour d'une bague (56) du palier pivotant (54).

4. Module de courroie selon la revendication 2 ou 3,
dans lequel le support sur palier (66) présente au moins un deuxième crochet d'encliquetage (68) qui vient en prise autour d'une bague (55) du palier pivotant (54).

5. Module de courroie selon la revendication 4,
dans lequel l'au moins un premier crochet d'encliquetage (82) et l'au moins un deuxième crochet d'encliquetage (68) sont orientés parallèlement à l'axe de rotation associé (51), et ceux-ci étant tournés dans des directions opposées.

6. Module de courroie selon l'une quelconque des revendications précédentes,
dans lequel le corps de base (60) présente deux tourillons (61 ; 62) s'étendant dans la direction longitudinale (11), lesquels s'engagent dans le support (30) de manière être serrés avec celui-ci.

7. Module de courroie selon l'une quelconque des revendications précédentes,
dans lequel l'au moins un tourillon (61 ; 62) présente au moins un profil en dents de scie (63 ; 64) qui s'applique contre le support (30).

8. Module de courroie selon l'une quelconque des revendications précédentes,
dans lequel le corps de base (60) présente une première saillie (71) qui s'étend à partir de la plaque latérale (65) perpendiculairement à la direction longitudinale (11), laquelle est réalisée d'une seule pièce avec la plaque latérale (65), l'au moins un tourillon (61 ; 62) s'étendant à partir de la première saillie (71) dans la direction longitudinale (11).

9. Module de courroie selon la revendication 8,
dans lequel le support (30) présente deux guides latéraux parallèles (35) pour la portion de courroie aller et/ou la portion de courroie retour (21 ; 22), au moins un guide latéral (70) suivant la première saillie (71) en alignement dans la direction longitudinale (11).

10. Module de courroie selon l'une quelconque des revendications précédentes,
dans lequel au moins un module de déviation (50), de préférence deux modules de déviation (50), présentent une première et une deuxième ouverture (57 ; 58) qui sont disposées sur des côtés opposés dudit module de déviation (50), la courroie de transport sans fin (20) étant guidée à travers la première et la deuxième ouverture (57 ; 58).

11. Module de courroie selon l'une quelconque des revendications précédentes,
dans lequel le corps de base (60) est réalisé avec une symétrie spéculaire par rapport à un plan de symétrie qui s'étend parallèlement à la direction longitudinale (11).

12. Module de courroie selon l'une quelconque des revendications précédentes,
dans lequel les deux modules de déviation (50) présentent un corps de base (60), les deux corps de base (60) et les deux poulies de renvoi (80) étant réalisés de manière identique.

13. Module de courroie selon l'une quelconque des revendications précédentes,
dans lequel la plaque latérale (65) du corps de base (60) est orientée perpendiculairement à l'axe de rotation (51) de la poulie de renvoi associée (80).

14. Module de courroie selon l'une quelconque des revendications précédentes,
dans lequel le support sur palier (66) présente un orifice d'entraînement (67) s'étendant le long de l'axe de rotation associé (51), la poulie de renvoi (80) pénétrant avec une saillie d'entraînement (85) dans l'orifice d'entraînement (67).
